# EUROPÄISCHE PATENTSCHRIFT

(11) **EP 1 068 765 B1**
(45) Veröffentlichungstag und Bekanntmachung des Hinweises auf die Patenterteilung: **07.05.2008**
(21) Anmeldenummer: 99916805.7
(22) Anmeldetag: 19.03.1999
(51) Int. Cl.: H04Q 11/04

(54) **VERFAHREN UND VORRICHTUNG ZUR ANKOPPLUNG EINER ATM-KOMMUNIKATIONSSCHICHT AN MEHRERE ZEITMULTIPLEX-KOMMUNIKATIONSANSCHLÜSSE**
METHOD AND DEVICE FOR COUPLING AN ATM COMMUNICATIONS LAYER TO SEVERAL TIME-DIVISION MULTIPLEX COMMUNICATIONS PORTS
PROCEDE ET DISPOSITIF POUR LE COUPLAGE D'UNE COUCHE DE COMMUNICATION MTA A PLUSIEURS CONNEXIONS DE COMMUNICATION A MULTIPLEXAGE DANS LE TEMPS

(30) Priorität: 07.04.1998 DE 19815605
(43) Veröffentlichungstag der Anmeldung: 17.01.2001
(73) Patentinhaber: Nokia Siemens Networks GmbH & Co. KG, 81541 München (DE)
(72) Erfinder: KLUG, Andreas, D-83607 Holzkirchen (DE)
(86) Internationale Anmeldenummer: PCT/DE1999/000783
(87) Internationale Veröffentlichungsnummer: WO 1999/052321

(56) Entgegenhaltungen:
- WO-A-97/32447
- US-A- 5 509 001

## Beschreibung

Die Erfindung betrifft ein Verfahren und eine Vorrichtung zum Ankoppeln einer ATM-Kommunikationsschicht an mehrere voneinander unabhängige Zeitmultiplex-Kommunikationsanschlüsse.

Im asynchronen Transfermodus (ATM) werden Daten unabhängig von der durch sie repräsentierten Information (Sprachkommunikation, Datenkommunikation, Multimedia) in der ATM-Schicht in Zellen zu 53 Byte (48 Byte Nutzdaten und 5 Byte Steuerdaten) übertragen. Die Zellen werden dabei nicht kontinuierlich, sondern in Abhängigkeit von der momentanen Nachfrage nach Übertragungsbandbreite asynchron oder burst-weise übermittelt.

Um eine solche leistungsfähige ATM-Schicht an Endstellen oder lokale Netzwerke anzukoppeln, ist es erforderlich, den Zellenstrom der ATM-Schicht auf mehrere, zeitlich voneinander unabhängige Zeitmultiplex-Kommunikationsanschlüsse (Ports) aufzuteilen. Dabei tritt das Problem der Entkopplung des zeitlich unkorrelierten Verhaltens der ATM-Kommunikationsschicht mit den zeitlich unkorrelierten Zellübertragungsanforderungen der mehreren Zeitmultiplex-Kommunikationsanschlüsse auf. Dabei muß, um den Echtzeitanforderungen beispielsweise an die Sprachkommunikation zu genügen, ein möglichst günstiges Zell-verzögerungs-Variations(Cell Delay Variation, CDV)-Verhalten sichergestellt werden. Das heißt, die Zeitverzögerung einzelner Zellen darf nicht stärker als ein festgelegter Wert schwanken, um bei der Übertragung aufeinanderfolgender Zellen über verschiedene Kommunikationswege eine Verfälschung der zeitlichen Abfolge von Zellen zu vermeiden.

Es ist bekannt, für eine Anzahl N von Zeitmultiplex-Kommunikationsanschlüssen eine Warteschlange mit einer Zellrate entsprechend der N-fachen Zellrate der einzelnen Ports (es sei angenommen, alle Ports haben die gleiche typische Übertragungsbandbreite) zu erzeugen. Die Zellen Warteschlange werden dann nach dem sogenannten Round-Robin-Verfahren auf die N Anschlüsse verteilt. Dabei werden diejenigen der N Anschlüsse, die gerade eine Zelle anfordern, in einer festen Reihenfolge nacheinander zellweise von der Warteschlange bedient. Da die N Kommunikationsanschlüsse zeitlich voneinander unabhängig sind, kann es vorkommen, daß zu einem bestimmten Zeitpunkt bis zu N Zellen gleichzeitig von der Warteschlange nachgefragt werden. Die Ankopplung der ATM-Kommunikationsschicht an die N Zeitmultiplex-Kommunikations-anschlüsse muß somit sowohl die ATM-Bursts als auch die port-seitigen Schwankungen der Nachfrage nach Zellen "abpuffern" können. Andererseits führen zu lange Warteschlangen zu einer Verschlechterung des Zellverzögerungs-Variationsverhaltens der Ankopplung.

Das Format und die Spezifikationen der ATM-Schicht sind beispielsweise in Rathgeb, Wallmeier, "ATM-Infrastruktur für die Hochleistungskommunikation", S. 78 bis 90, und die Ankopplung an eine Mehrzahl von Zeitmultiplex-Anschlüssen in ATM-Forum: "Baseline Text for Inverse Multiplexing for ATM, AF-PHY-0086.000" beschrieben. Die Patentschrift US 5509001, Offenbart, das anstelle einer ungültigen Zelle eine Leerzelle an die ATM-Vermittlung weitergeleitet werden kann. Der Erfindung liegt das Problem zugrunde, ein Verfahren und eine Vorrichtung zur Realisierung der Ankopplung einer ATM-Kommunikationsschicht an mehrere Zeitmultiplex-Kommunikationsanschlüsse vorzuschlagen, wobei Zellverluste vermieden werden und die Variation der Zellverzögerung minimiert ist.

Gelöst wird das Problem durch das in Anspruch 1 definierte Verfahren und die in Anspruch 10 definierte Vorrichtung. Das Verfahren weist die Verfahrensschritte auf:
- Erzeugung einer Steuersignalsequenz mit einer Taktrate entsprechend der Gesamt-Nutzzellrate CR_{N} der N Zeitmultiplex-Kommunikationsanschlüsse, wobei die Steuersignale einen ersten oder einen zweiten Zustand repräsentieren können,
- Bereitstellung eines festen Datenmusters,
- Übertragung der aus der ATM-Kommunikationsschicht kommenden ATM-Zellen in eine ATM-Zellen-Warteschlange,
- auf Anforderung, Übertragung einer ATM-Zelle aus der ATM-Warteschlange an den anfordernden Zeitmultiplex-Kommunikationsanschluß, wenn das jeweils älteste Steuersignal der Steuersignalsequenz den ersten Zustand repräsentiert, und Übertragung des festen Datenmusters an den anfordernden Zeitmultiplex-Kommunikationsanschluß, wenn das älteste Steuersignal der Steuersignalsequenz den zweiten Zustand repräsentiert, und
- Löschung des ältesten Steuersignals der Steuersignalsequenz.

Durch die Steuersignalsequenz wird eine Taktung der Übertragung der Kommunikationszellen von der ATM-Warteschlange an den anfordernden Anschluß(Port) vorgegeben, die unabhängig von der asynchronen Zufuhr von ATM-Zellen in die ATM-Zellen-Warteschlange als auch der ungleichmäßigen Zellnachfrage von den N zeitlich voneinander unabhängigen Ports ist. Die Steuersignalsequenz emuliert ein Verhalten der zeitlich unkorrelierten Kommunikationsanschlüsse (physical layer) entsprechend einem Anschluß mit N-facher Bandbreite. Dabei ist die Taktrate entsprechend der Gesamtbandbreite der N Ports gewählt, so daß im Mittel die in der N-Port-Warteschlange erzeugte Anzahl von Zellen gleich der Zellnachfrage der N Ports ist. Je nachdem, ob sich in der ATM-Warteschlange eine ATM-Zelle befindet oder nicht, wird entweder diese ATM-Zelle oder ein festes Datenmuster (Stopfzelle) übertragen. Welche der beiden Zellinhalte der N-Port-Warteschlange hinzugefügt wird, hängt von dem jeweils ältesten Steuersignal der Steuersignalsequenz ab. Das Steuersignal kann dabei einen ersten oder einen zweiten Zustand repräsentieren.

Vorzugsweise wird jeder Zelle in der ATM-Zellen-Warteschlange ein den ersten der zwei Zustände repräsentierendes Steuersignal zugeordnet. Zu jedem durch die vorgegebene Taktrate bestimmten Zeitpunkt zur Erzeugung eines neuen Steuersignals wird überprüft, ob sich in der ATM-Warteschlange eine Zelle befindet, der noch kein den ersten Zustand repräsentierendes Steuersignal zugeordnet ist. Ist das der Fall, wird ein den ersten Zustand repräsentierendes Steuersignal, beispielsweise eine logische "1", ansonsten ein den zweiten Zustand repräsentierendes Steuersignal, beispielsweise eine logische "0" erzeugt. Die Länge der Steuersignalsequenz kann entsprechend dem Verfahren der virtuellen Verkettung der N Kommunikationsports gewählt werden und beispielsweise bis zu 3˙N Steuersignale betragen.

Die Übertragung einer Zelle aus der ATM-Kommunikationsschicht in die ATM-Warteschlange wird nur freigegeben, wenn die Anzahl der Zellen in der ATM-Warteschlange minus der Anzahl der den ersten Zustand repräsentierenden Steuersignale ("Einsen") kleiner oder gleich einer Zahl X ist. Mit X kann die Vorlaufzeit für die Zellübertragung von der ATM-Schicht an die Kommunikationsanschlüsse eingestellt werden. X muß mindestens ≥ 1 sein, um zuverlässig die Übertragung aller Zellen zu gewährleisten. Je größer X jedoch eingestellt wird, desto stärker variiert die Vorlaufzeit und desto schlechter ist das Zellverzögerungsvariations(CDV)-Verhalten.

Die N Zeitmultiplex-Kommunikationsanschlüsse können völlig unkorreliert oder teilweise miteinander korreliert sein. Die Aufteilung der Zellen auf die N Anschlüsse kann nach dem sogenannten Round-Robin-Verfahren oder einem je nach gewünschter Anwendung geeigneten Verfahren erfolgen.

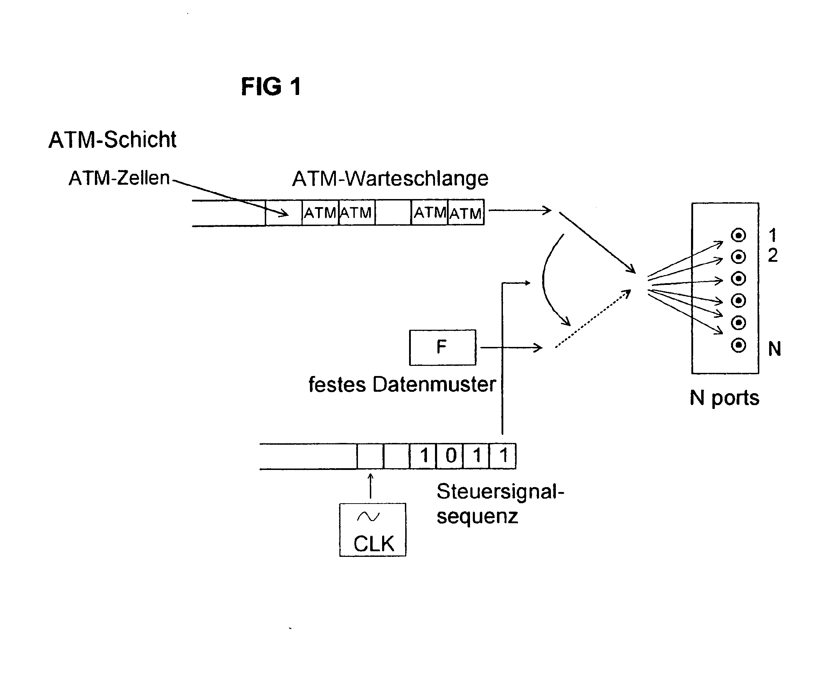

Ein Ausführungsbeispiel der vorliegenden Erfindung wird anhand von Fig. 1 beschrieben, die eine schematische Darstellung zur Erläuterung der Funktionsweise des erfindungsgemäßen Verfahrens und der erfindungsgemäßen Vorrichtung zeigt.

Aus der ATM-Schicht gelangen die zu übertragenden Daten in Einheiten von ATM-Zellen zu 53 Byte zeitlich unkorreliert auf die ATM-Zellen-Warteschlange. Eine Taktgeberschaltung CLK erzeugt Taktimpulse mit einer Frequenz, die der Gesamtzellrate aller N Zeitmultiplex-Kommunikationsanschlüsse entspricht, die (im Bild rechts) angeschlossen sind. Zu jedem Zeitpunkt eines Taktimpulses prüft die erfindungsgemäße Vorrichtung, ob sich in der ATM-Zellen-Warteschlange eine ATM-Zelle befindet, der noch kein Steuersignal zugeordnet wurde. Ist dies der Fall, so wird eine logische "1" als Steuersignal in die Steuersignalsequenz eingetragen. Befindet sich keine "neue" ATM-Zelle in der Warteschlange, so wird eine "0" in die Steuersignalsequenz eingetragen. Dieser Vorgang wiederholt sich bei jedem Taktimpuls von der Taktgeberschaltung CLK, so daß jeder ATM-Zelle in der ATM-Zellen-Warteschlange eine "1" der Steuersignalsequenz zugeordnet wird. Erfolgt von einem der N Kommunikationsanschlüsse eine Zellanforderung, so entscheidet der Eintrag in der Steuersignalsequenz, ob eine ATM-Zelle oder ein festes Datenmuster F, eine sogenannte Stopfzelle, übertragen wird. Ist das vorderste (älteste) Signal der Steuersignalsequenz eine "1", so wird beispielsweise eine ATM-Zelle übertragen, ist es eine "0", so wird die Stopfzelle F übertragen. Die Aufteilung der Zellen auf die N Zeitmultiplex-Kommunikationsanschlüsse erfolgt nach dem an sich bekannten Round-Robin-Verfahren. Anschließend wird dieses älteste Signal der Steuersignalsequenz gelöscht.

Um einen Zellverlust zu vermeiden, prüft die erfindungsgemäße Ankopplungsvorrichtung, ob die Anzahl der ATM-Zellen in der ATM-Zellen-Warteschlange minus der Anzahl der "Einsen" in der Steuersignalsequenz kleiner gleich x ist (mit x ≥ 1). Ist dies der Fall, bedeutet dies, daß sich maximal eine ATM-Zelle in der Warteschlange befindet, der noch keine "1" in der Steuersignalsequenz zugeordnet ist und gibt die Übertragung von ATM-Zellen in die ATM-Warteschlange frei. Ist die Differenz größer, so wird die Übertragung blockiert, bis wieder genügend "Einsen" in der Steuersignalsequenz erzeugt wurden.

Die vorliegende Erfindung ermöglicht so eine asynchrone Ankopplung einer ATM-Kommunikationsschicht an mehrere voneinander unabhängige Zeitmultiplex-Kommunikationsanschlüsse, wobei Zellverluste vermieden und gleichzeitig die Zellverzögerungszeit-Variation minimal gehalten wird. Die Steuersignalsequenz emuliert ein Verhalten der N zeitlich voneinander unabhängigen Kommunikationsanschlüsse wie ein Anschluß mit der Gesamtbandbreite aller N Anschlüsse. Dadurch werden Bursts der ATM-Schicht und burstartiges Verhalten der zeitlich unkorrelierten Anschlüsse voneinander entkoppelt.

## Patentansprüche

1. Verfahren zur Ankopplung einer ATM-Kommunikationsschicht an eine Mehrzahl N zeitlich voneinander unabhängiger Zeitmultiplex-Kommunikationsanschlüsse mit einer Gesamt-Nutzzellrate CR_{N}, aufweisend die Schritte:
- Erzeugung einer Steuersignalsequenz mit einer Taktrate entsprechend der Gesamt-Nutzzellrate CR_{N} der N Zeitmultiplex-Kommunikationsanschlüsse, wobei die Steuersignale einen ersten oder einen zweiten Zustand repräsentieren können,
- Bereitstellung eines festen Datenmusters,
- Übertragung der aus der ATM-Kommunikationsschicht kommenden ATM-Zellen in eine ATM-Zellen-Warteschlange,
- auf Anforderung, Übertragung einer ATM-Zelle aus der ATM-Warteschlange an den anfordernden Zeitmultiplex-Kommunikationsanschluß, wenn das jeweils älteste Steuersignal der Steuersignalsequenz den ersten Zustand repräsentiert, und Übertragung des festen Datenmusters an den anfordernden Zeitmultiplex-Kommunikationsanschluß, wenn das älteste Steuersignal der Steuersignalsequenz den zweiten Zustand repräsentiert, und
- Löschung des ältesten Steuersignals der Steuersignalsequenz.

2. Verfahren nach Anspruch 1,
**dadurch gekennzeichnet,**
**daß** jeder ATM-Zelle der ATM-Warteschlange in der Steuersignalsequenz ein Steuersignal, das den ersten Zustand repräsentiert, zugeordnet wird, und wobei, wenn in Übereinstimmung mit der vorgegebenen Taktrate ein neues Steuersignal der Steuersignalsequenz erzeugt wird, überprüft wird, ob in der ATM-Warteschlange noch eine ATM-Zelle vorhanden ist, der kein den ersten Zustand repräsentierendes Steuersignal zugeordnet ist, und in diesem Fall ein den ersten Zustand repräsentierendes Steuersignal erzeugt wird, und andernfalls ein den zweiten Zustand repräsentierendes Steuersignal erzeugt wird.

3. Verfahren nach Anspruch 1 oder 2,
**dadurch gekennzeichnet,**
**daß** das den ersten Zustand repräsentierende Steuersignal durch eine logische "1" und das den zweiten Zustand repräsentierende Steuersignal durch eine logische "0" repräsentiert wird.

4. Verfahren nach einem der Ansprüche 1 bis 3,
**dadurch gekennzeichnet,**
**daß** die Steuersignalsequenz eine Länge von bis zu 3˙N Signalen hat.

5. Verfahren nach einem der Ansprüche 1 bis 4,
**dadurch gekennzeichnet,**
**daß** eine Zellübertragung von der ATM-Kommunikationsschicht in die ATM-Warteschlange freigegeben wird, wenn die Anzahl der in der ATM-Warteschlange vorhandenen ATM-Zellen minus der Anzahl der den ersten Zustand repräsentierenden Steuersignale der Steuersignalsequenz ≤ X ist.

6. Verfahren nach Anspruch 5,
**dadurch gekennzeichnet,**
**daß** X ≥ 1 ist.

7. Verfahren nach Anspruch 6,
**dadurch gekennzeichnet,**
**daß** X = 1 ist.

8. Verfahren nach einem der Ansprüche 1 bis 7,
**dadurch gekennzeichnet,**
**daß** die N Zeitmultiplex-Anschlüsse unkorreliert sind.

9. Verfahren nach Anspruch 8,
**dadurch gekennzeichnet,**
**daß** die ATM-Zellen und die das feste Datenmuster enthaltenden Zellen nach dem Round-Robin-Verfahren auf die N Kommunikationsanschlüsse aufgeteilt werden.

10. Vorrichtung zur Ankopplung einer ATM-Kommunikationsschicht an eine Mehrzahl N zeitlich voneinander unabhängiger Zeitmultiplex-Kommunikationsanschlüsse mit einer Gesamt-Nutzzellrate CR_{N}, aufweisend:
- eine Einrichtung zur Erzeugung einer Steuersignalsequenz mit einer Taktrate entsprechend der Gesamt-Nutzzellrate CR_{N} der N Zeitmultiplex-Kommunikationsanschlüsse, wobei die Steuersignale einen ersten oder einen zweiten Zustand repräsentieren können,
- eine Einrichtung zur Bereitstellung eines festen Datenmusters,
- eine Einrichtung zur Übertragung der aus der ATM-Kommunikationsschicht kommenden ATM-Zellen in eine ATM-Zellen-Warteschlange,
- eine Einrichtung zur Übertragung einer ATM-Zelle aus der ATM-Warteschlange an einen anfordernden Zeitmultiplex-Kommunikationsanschluß, wenn das jeweils älteste Steuersignal der Steuersignalsequenz den ersten Zustand repräsentiert, und Übertragung des festen Datenmusters an den anfordernden Zeitmultiplex-Kommunikationsanschluß, wenn das älteste Steuersignal der Steuersignalsequenz den zweiten Zustand repräsentiert, und
- eine Einrichtung zur Löschung des ältesten Steuersignals der Steuersignalsequenz.

## Claims

1. Method for coupling an ATM communication layer to a multiplicity of N time-division multiplex communication ports which are independent of one another in time, having a total payload cell rate CR_{N}, having the following steps:
- generating a control signal sequence with a clock rate corresponding to the total payload cell rate CR_{N} of the N time-division multiplex communication ports, wherein the control signals can represent a first or a second state,
- providing a fixed data pattern,
- transmitting the ATM cells coming from the ATM communication layer into an ATM cell queue,
- on request, transmitting an ATM cell from the ATM queue to the requesting time-division multiplex communication port if the respective oldest control signal of the control signal sequence represents the first state, and transmitting the fixed data pattern to the requesting time-division multiplex communication port if the oldest control signal of the control signal sequence represents the second state, and
- deleting the oldest control signal of the control signal sequence.

2. Method according to Claim 1, **characterized in that** a control signal which represents the first state is allocated to each ATM cell of the ATM queue in the control signal sequence and wherein, if a new control signal of the control signal sequence is generated in correspondence with the predetermined clock rate, a check is made whether in the ATM queue, there is still an ATM cell to which no control signal representing the first state is allocated, and in this case a control signal representing the first state is generated and otherwise a control signal representing the second state is generated.

3. Method according to Claim 1 or 2, **characterized in that** the control signal representing the first state is represented by a logical "1" and the control signal representing the second state is represented by a logical "0".

4. Method according to one of Claims 1 to 3, **characterized in that** the control signal sequence has a length of up to 3*N signals.

5. Method according to one of Claims 1 to 4, **characterized in that** a cell transmission from the ATM communication layer into the ATM queue is enabled if the number of the ATM cells present in the ATM queue minus the number of the control signals, representing the first state, of the control signal sequence is ≤ X.

6. Method according to Claim 5, **characterized in that** X ≥ 1.

7. Method according to Claim 6, **characterized in that** X = 1.

8. Method according to one of Claims 1 to 7, **characterized in that** the N time-division multiplex ports are uncorrelated.

9. Method according to Claim 8, **characterized in that** the ATM cells and the cells containing the fixed data pattern are distributed over the N communication ports in accordance with the round-robin method.

10. Device for coupling an ATM communication layer to a multiplicity of N time-division multiplex communication ports which are independent of one another in time, with a total payload cell rate of CR_{N}, having:
- a device for generating a control signal sequence with a clock rate corresponding to the total payload cell rate CR_{N} of the N time-division multiplex communication ports, wherein the control signals can represent a first or a second state,
- a device for providing a fixed data pattern,
- a device for transmitting the ATM cells coming from the ATM communication layer into an ATM cell queue,
- a device for transmitting an ATM cell from the ATM queue to a requesting time-division multiplex communication port if the respective oldest control signal of the control signal sequence represents the first state, and transmitting the fixed data pattern to the requesting time-division multiplex communication port if the oldest control signal of the control signal sequence represents the second state, and
- a device for deleting the oldest control signal of the control signal sequence.

## Revendications

1. Procédé de couplage d'une couche de communication ATM à une pluralité de N connexions de communication à multiplexage dans le temps indépendantes les unes des autres dans le temps avec un débit total de cellules utiles CR_{N}, comportant les étapes:
- génération d'une séquence de signaux de commande avec une fréquence d'horloge correspondant au débit total de cellules utiles CR_{N} des N connexions de communication à multiplexage dans le temps, les signaux de commande pouvant représenter un premier ou un deuxième état,
- mise à disposition d'un modèle de données fixe,
- transmission des cellules ATM venant de la couche de communication ATM à une file d'attente de cellules ATM,
- sur requête, transmission d'une cellule ATM de la file d'attente ATM à la connexion de communication à multiplexage dans le temps, de laquelle émane la requête, si le signal de commande respectivement le plus ancien de la séquence de signaux de commande représente le premier état et transmission du modèle de données fixe à la connexion de communication à multiplexage dans le temps, de laquelle émane la requête, si le signal de commande le plus ancien de la séquence de signaux de commande représente le deuxième état et
- effacement du signal de commande le plus ancien de la séquence de signaux de commande.

2. Procédé selon la revendication 1, **caractérisé en ce qu'**à chaque cellule ATM de la file d'attente ATM est affecté, dans la séquence de signaux de commande, un signal de commande qui représente le premier état et tout en étant que, si un nouveau signal de commande de la séquence de signaux de commande est généré en conformité avec la fréquence d'horloge prédéterminée, il est vérifié s'il y a encore dans la file d'attente ATM une cellule ATM à laquelle n'est affecté aucun signal de commande représentant le premier état et, dans ce cas, un signal de commande représentant le premier état est généré et, autrement, un signal de commande représentant le deuxième état est généré.

3. Procédé selon la revendication 1 ou 2, **caractérisé en ce que** le signal de commande représentant le premier état est représenté par un «1» logique et le signal de commande représentant le deuxième état est représenté par un «0» logique.

4. Procédé selon l'une des revendications 1 à 3, **caractérisé en ce que** la séquence de signaux de commande a une longueur de jusqu'à 3·N signaux.

5. Procédé selon l'une des revendications 1 à 4, **caractérisé en ce qu'**une transmission de cellules de la couche de communication ATM à la file d'attente ATM est autorisée si le nombre des cellules ATM présentes dans la file d'attente ATM moins le nombre des signaux de commande de la séquence de signaux de commande, qui représentent le premier état, est ≤ X.

6. Procédé selon la revendication 5, **caractérisé en ce que** X ≥ 1.

7. Procédé selon la revendication 6, **caractérisé en ce que** X = 1.

8. Procédé selon l'une des revendications 1 à 7,
**caractérisé en ce que** les N connexions à multiplexage dans le temps sont non corrélées.

9. Procédé selon la revendication 8, **caractérisé en ce que** les cellules ATM et les cellules contenant le modèle de données fixe sont réparties sur les N connexions de communication selon le procédé Round Robin.

10. Dispositif de couplage d'une couche de communication ATM à une pluralité de N connexions de communication à multiplexage dans le temps indépendantes les unes des autres dans le temps avec un débit total de cellules utiles CR_{N}, comportant:
- un dispositif pour générer une séquence de signaux de commande avec une fréquence d'horloge correspondant au débit total de cellules utiles CR_{N} des N connexions de communication à multiplexage dans le temps, les signaux de commande pouvant représenter un premier ou un deuxième état,
- un dispositif pour mettre à disposition un modèle de données fixe,
- un dispositif pour transmettre à une file d'attente de cellules ATM des cellules ATM venant de la couche de communication ATM,
- un dispositif pour transmettre une cellule ATM de la file d'attente ATM à une connexion de communication à multiplexage dans le temps, de laquelle émane la requête, si le signal de commande respectivement le plus ancien de la séquence de signaux de commande représente le premier état et transmission du modèle de données fixe à la connexion de communication à multiplexage dans le temps, de laquelle émane la requête, si le signal de commande le plus ancien de la séquence de signaux de commande représente le deuxième état et
- un dispositif pour effacer le signal de commande le plus ancien de la séquence de signaux de commande.
